Europäisches Patentamt

European Patent Office

Office européen des brevets

(19)

(11) Publication number: **0 050 513**
**A2**

(12) # EUROPEAN PATENT APPLICATION

(21) Application number: **81304883.2**

(22) Date of filing: **20.10.81**

(51) Int. Cl.³: **B 66 C 1/64**, F 16 B 45/06

(30) Priority: **22.10.80 GB 8034009**

(43) Date of publication of application: **28.04.82**
**Bulletin 82/17**

(84) Designated Contracting States: **DE FR GB**

(71) Applicant: **Riley, Kenneth Alan, 66, Brown Street (West),**
**Colne Lancashire, BB8 9ND (GB)**
Applicant: **Riley, Keith, 66, Brown Street (West), Colne**
**Lancashire, BB8 9ND (GB)**

(72) Inventor: **Riley, Kenneth Alan, 66, Brown Street (West),**
**Colne Lancashire, BB8 9ND (GB)**
Inventor: **Riley, Keith, 66, Brown Street (West), Colne**
**Lancashire, BB8 9ND (GB)**

(74) Representative: **Neill, Alastair William et al, Appleyard**
**Lees & Co. 15 Clare Road, Halifax West Yorkshire**
**HX1 2HY (GB)**

(54) **Clamps.**

(57) A clamp is provided for clamping on to an overhead beam having an inverted bell-shaped cross-section. When a control member (40) is operated hook-like portions (20) of arms (10, 11) are clamped over the upper rims of the beam and at least one auxiliary clamping member (25, 26) is clamped against the lower part of the beam to assist the clamp to sustain side loads. The clamp may also be adapted to clamp on to round cross-section bars or tubes.

EP 0 050 513 A2

1.

## Clamps

The invention relates to clamps, and particularly to clamps of the type arranged for clamping on to elongate members such as an overhead beam, for example as described in U.K. Patent No.1567079.

These known clamps are designed for clamping on to I-section beams and are unsuitable for clamping on to some other beam configurations, for example beams having an inverted bell-shaped cross-section. They are also unsuitable for clamping on to other elongate members such as a round cross-section bar or tube.

The invention provides a clamp for use in clamping on to an elongate member such as an overhead beam, the clamp comprising a pair of arms pivotally connected together, and a control member operable to urge the arms together to clamp a beam therebetween, characterised in that the free end of each arm is hook shaped so that the arms can be hooked around the elongate member, to engage the elongate member at a point lying on one side of the longitudinal axis of the elongate member, the control member being operable to prevent the arms from becoming unhooked, and being arranged so that it also operates at least one auxiliary clamping member to apply clamping pressure to the elongate member at a point lying on the other side of the longitudinal axis of the elongate member, thereby assisting the clamp to sustain side loads.

The clamp may be arranged for clamping on to a beam having an inverted bell-shaped cross-section, the free end of each arm being hook shaped so that the arms can be hooked one over each rim of the inverted bell-shaped cross-section, the control member being operable to prevent the arms from becoming unhooked from the inverted bell-shaped cross-section of the beam, and being arranged so that it also operates at least one auxiliary clamping member to apply clamping pressure to the lower part of the inverted bell-shaped cross-section, thereby assisting the clamp to sustain side loads.

Preferably the control member controls two auxiliary clamping members, one attached to each of the arms, so that the lower part of the inverted bell-shaped cross-section can be clamped between the auxiliary clamping members.

The clamp may be such that when the clamp is positioned around a beam and the control member is operated, the auxiliary clamping members first move inwardly and when their movement is arrested by engagement with the lower part of the inverted bell-shaped cross-section further operation of the control member urges the two arms towards one another.

The two auxiliary clamping members may be pivotally mounted one on each of the arms and the control member may comprise a screw-threaded rod extending between the auxiliary clamping members, the rod having left and right hand threaded portions so that rotation of the rod in one direction causes the auxiliary clamping members to move towards one another and rotation of the rod in the opposite direction causes the auxiliary clamping members to move away from one another.

Preferably the arms, auxiliary clamping members and control rod form a five bar chain such that before the clamp is arranged around a beam there is play between the arms and they can be moved towards and away from one another to a limited extent without rotating the control rod, thus facilitating the rapid positioning of the arms around the beam.

3.

That part of each auxiliary clamping member which engages the beam when the clamp is in use may comprise a curved convex face.

By way of example, specific embodiments of the invention will now be described, with reference to the accompanying drawings, in which:-

Figure 1 is a side view of an embodiment of clamp according to the invention;

Figure 2 is a view in the direction of arrow II of Figure 1; and

Figure 3 is a perspective view of an alternative embodiment.

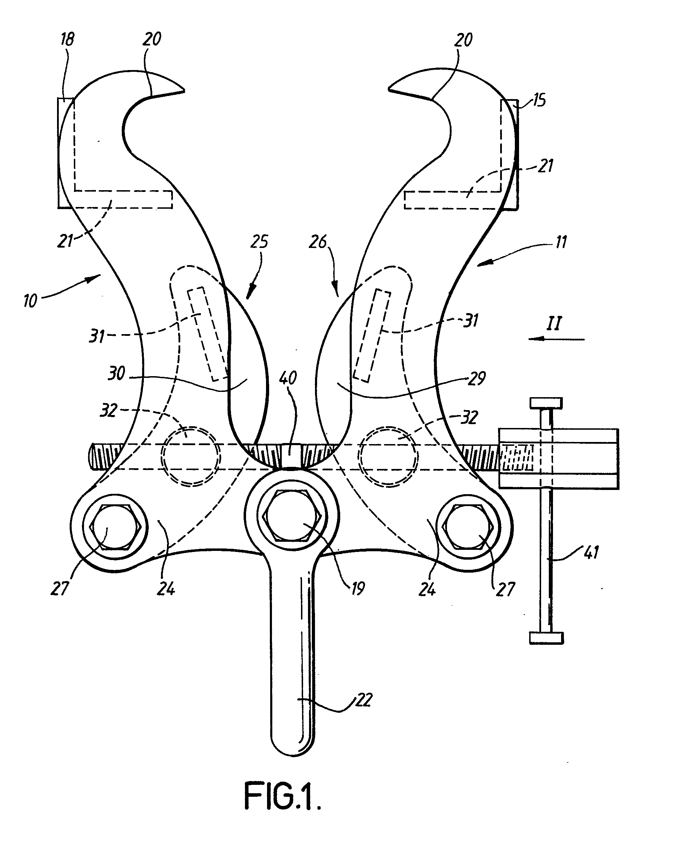

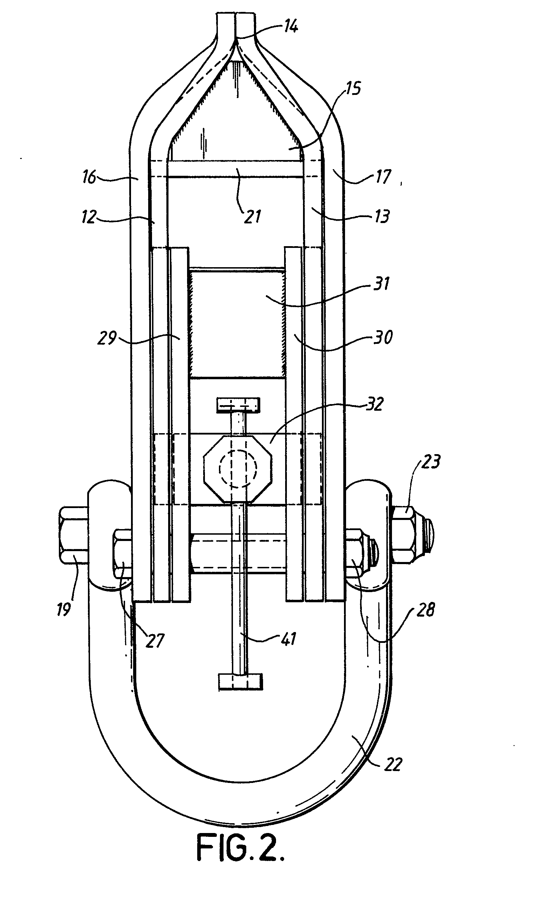

The clamp shown in Figures 1 and 2 comprises two arms 10 and 11. As best seen from Figure 2, the arm 11 is built up from two plates 12 and 13 which are spaced apart except at their upper ends, where they taper inwardly to meet at 14. A triangular stiffening web 15 is welded between the plates.

The arm 10 is similarly constructed from plates 16 and 17, with a stiffening web 18, the only difference being that the plates 16 and 17 are slightly further apart than the plates 12 and 13, so that the lower end of the arm 11 can fit inside the lower end of the arm 10 where the two arms are pivotally connected together by a bolt 19.

4.

The free end of each arm has a hook-shaped portion 20 and it will be seen that the inner faces of the arms are shaped to define an area which has the appearance of an inverted bell.

Further transverse stiffening plates 21 are welded between the plates making up the arms.

The bolt 19, in addition to providing a pivot for the two arms, supports a shackle 22 and the free end of the bolt is secured by a nut 23 as shown in Figure 2.

Each arm has a portion 24 projecting away from the bell shape which lies between the arms. Auxiliary clamping arms 25 and 26 are respectively pivotally connected to the arms 10 and 11 by bolts 27 which pass through the portions 24, through the auxiliary clamping members 25 and 26 respectively, and are secured by nuts 28.

As best seen in Figure 2, the auxiliary clamping member 26 comprises a pair of plates 29 and 30 interconnected by a welded support web 31. Also extending between the plates 29 and 30 is a rotatable knuckle 32.

Auxiliary clamping member 25 is similarly constructed, its plates also being interconnected by a welded support web 31 and a rotatable knuckle 32. The plates making up the auxiliary clamping members 25 and 26 are generally crescent-shaped, their curved convex faces being directed towards the bell-shape defined between the arms 10 and 11.

A screw-threaded control rod 40 extends between the two knuckles 32 and a tommy bar 41 is arranged at one end. The ends of the rod 40 are respectively provided with right and left hand threads so that when the rod is rotated in one direction, the knuckles 32 are urged towards one another,

5.

and when the rod is rotated in the opposite direction, the knuckles 32 are urged away from one another.

The portions of the arms lying between the bolts 27 and 19, the portions of the arms lying between the bolts 27 and the knuckles 32, and the control rod 40, make up a five bar chain so that when the clamp is in its unused state as shown in the Figures the components making up the five bar chain are free to flop about to a limited extent and there is limited play between the arms 10 and 11.

The clamp is intended for clamping securely on to an overhead beam having a cross-section in the form of an inverted bell-shape, so that the shackle 22 can be used as an anchorage point on the beam. It is frequently necessary to provide secure anchorage points on such overhead beams, for example in mines, in order to take the strain of hoists and other equipment.

The precise size and proportions of the cross-sections of the beams may vary, but they will all generally have a bell-shape. Because of the five bar chain effect, the arms 10 and 11 can be pulled apart to a limited extent, arranged around the beam, and the ends 20 of the arms can be hooked over the opposite rims of the beam. There is no need to rotate the control rod 40 at all during this initial phase, although the rod 40 will in fact be arranged so that the auxiliary clamping members 25 and 26 are further apart than they are shown in Figure 1, so that they do not project into the bell-shaped area between the arms 10 and 11.

In order to secure the clamp in position once it has been hooked on to the beam, the rod 40 is rotated in the direction which urges the two knuckles 32 towards one another. The initial effect of this movement is to pivot the auxiliary clamping members 25 and 26 towards one another, until their movement is arrested by contact with the lower part of the

6.

beam. At this point, further movement of the upper parts of the auxiliary clamping members 25 and 26 is impossible, so continued rotation of the rod 40 causes the lower ends of the auxiliary clamping members 25 and 26 to move towards one another, thus drawing the arms 10 and 11 together so that they cannot be unhooked from the beam. The final rotation of the rod 40 causes the hooked ends 20 to grip the rim of the beam tightly whilst the auxiliary clamping members 25 and 26 grip the lower part of the beam tightly.

Because the proportions of the beams with which the clamp is used may vary, it would not be possible to design a clamp in which the arms 10 and 11 themselves can grip both the rim of a beam and the lower part of a beam securely. It is unsatisfactory for only one part of the beam to be gripped. If only the lower part of the beam is securely gripped, there is a risk that the hooked portions 20 could become unhooked from the beam, with very serious consequences. If only the rim is gripped, the distance between the hooked portions 20 and the shackle 22 means that if side loads are applied to the shackle 22, as opposed to pure vertical loads, a considerable leverage is exerted on the hooks 20, and the clamp may slip on the beam, twist out of position, or become damaged. With the clamp forming the subject of this embodiment however, it is possible to provide secure clamping both of the rim of the beam and of the lower part of the beam. Mounting of the clamp on the beam can also be done more conveniently and quickly, because of the five bar chain effect.

7.


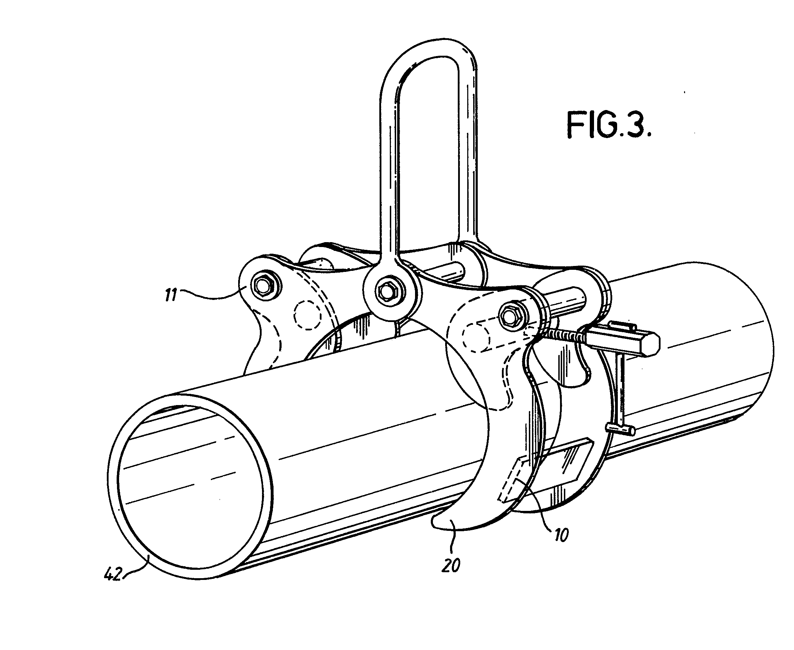

Figure 3 illustrates a clamp which is substantially identical to that of Figures 1 and 2, except that the arms 10 and 11 are shaped to hook around a circular cross-section object such as a pipe 42.

8.

## Claims

1. A clamp for use in clamping on to an overhead beam, the clamp comprising a pair of arms pivotally connected together, and a control member operable to urge the arms together to clamp a beam therebetween, characterised in that the free end (20) of each arm (10, 11) is hook shaped so that the arms can be hooked around the elongate member to engage the elongate member at a point lying on one side of the longitudinal axis of the elongate member, the control member (40) being operable to prevent the arms (10, 11) from becoming unhooked, and being arranged so that it also operates at least one auxiliary clamping member (25, 26) to apply clamping pressure to the elongate member at a point lying on the other side of the longitudinal axis of the elongate member, thereby assisting the clamp to sustain side loads.

2. A clamp for use in clamping on to an overhead beam, the clamp comprising a pair of arms pivotally connected together, and a control member operable to urge the arms together to clamp a beam therebetween, characterised in that the clamp is for use in clamping on to a beam having an inverted bell-shaped cross-section, the free end (20) of each arm (10, 11) being hook shaped so that the arms can be hooked one over each rim of the inverted bell-shaped cross-section, the control member (40) being operable to prevent the arms (10, 11) from becoming unhooked from the inverted bell-shaped cross-section of the beam, and being arranged so that it also operates at least one auxiliary clamping member (25, 26) to apply clamping pressure to the lower part of the inverted bell-shaped cross-section, thereby assisting the clamp to sustain side loads.

9.

3. A clamp as claimed in Claim 2, in which the control member (40) controls two auxiliary clamping members (25, 26) one attached to each of the arms (10, 11) so that the lower part of the inverted bell-shaped cross-section can be clamped between the auxiliary clamping members (25, 26).

4. A clamp as claimed in Claim 3, such that when the clamp is positioned round a beam and the control member (40) is operated, the auxiliary clamping members (25, 26) first move inwardly and when their movement is arrested by engagement with the lower part of the inverted bell-shaped cross-section further operation of the control member (40) urges the two arms (10, 11) towards one another.

5. A clamp as claimed in Claim 4, in which the two auxiliary clamping members (25, 26) are pivotally mounted one on each of the arms (10, 11) and the control member (40) comprises a screw-threaded rod extruding between the auxiliary clamping members, the rod having left and right hand threaded portions so that rotation of the rod in one direction causes the auxiliary members (25, 26) to move towards one another and rotation of the rod in the opposite direction causes the auxiliary clamping members (25, 26) to move away from one another.

6. A clamp as claimed in Claim 5, in which the arms (10, 11), auxiliary clamping members (20, 26) and control rod (40) form a five bar chain such that before the clamp is arranged around the beam there is play between the arms (10, 11) so that they can be moved towards and away from one another to a limited extent without the need to rotate the control rod (40), thus facilitating rapid positioning of the arms (10, 11) around the beam.

10.

7. A clamp as claimed in any one of the preceding claims in which that part of the or each auxiliary clamping member (25, 26) which engages the elongate member when the clamp is in use comprises a curved convex face.

FIG.1.

0050513

FIG.2.

FIG.3.